# EUROPEAN PATENT APPLICATION

(11) **EP 3 148 140 A1**
(43) Date of publication of application: **29.03.2017**
(21) Application number: 15306503.2
(22) Date of filing: 28.09.2015
(51) Int. Cl.: H04L 12/913

(54) **COMPUTING AND NETWORK RESOURCE RESERVATION**

(71) Applicant: ALCATEL LUCENT, 92100 Boulogne-Billancourt (FR)
(72) Inventor: VERCHERE, Dominique, 91620 NOZAY (FR); VIGOUREUX, Martin, 91620 NOZAY (FR)
(74) Representative: Loyer & Abello

(57) **Abstract**

A computing and network resource reservation method is disclosed for facilitating solution of the problem of identifying, requesting and allocating computing capacities among nodes in a network, as well as reserving, modifying, and freeing up computing resources at a targeted point to allow for execution of applications. The computing and network resource reservation method includes new RSVP and FEC TLV objects which provide the potential to deliver jointly network and compute services and to control these computing resources in the same way as transport network resources are controlled today

## Description

### Field of the invention

Embodiments of the present invention relate to data switched networks (e.g. IP, ATM, Frame Relay, Ethernet) and non-packet switched networks (TDM, OTN, WDM, Fibers, etc.), and more particularly to computing capacities at network nodes and a mechanism for distributing information concerning computing capacities which have been created at network nodes to peer network nodes such that the latter can transfer content for being processed on those network nodes having computing capacities.

### Background of the Invention

Network nodes (i.e. routers and switches) have the capacity to include considerable computing capacity, not only for routing and switching functions, but available as computing capacity for user application data. Such computing capacity is unrelated to the transport or routing function of the node, but the available computing resources may participate in both. The use of such computing capacity is currently in its infancy.

The continuing growth of broadband technology and the corresponding need for more and more computing capacity has to a large degree been driven by the hunger of customers for new processing intensive applications. To satisfy rapidly changing needs for computing capacity for applications which users are calling for, massive computing capabilities, easily allocated and de-allocated corresponding to changing consumer needs and preferences - which may differ from one location to another - are desirable.

Network nodes, i.e. switches and routers, have processing capacities which may be able to fulfill this function. A present limitation to the use of these capacities is the lack of solutions enabling use to be made of such computing capabilities for processing applications and for these computing capabilities to be managed (e.g., allocated/reserved, freed, modified) in a dynamic manner as needs evolve and change.

Currently, no solution exists to address the specified problem of controlling computing capacities hosted in network equipment to execute application instances of end-users. However it could be envisaged that the reservation of computing resources and the association with a given network flow or tunnel be achieved by means of manual configurations or through extended network management systems.

One solution that could be envisaged is to rely on what is known as the slow path. In the slow path, reliance is placed on the normal software processing path for packets unlike the so-called fast path which uses special packet handling hardware in routers, generally ASIC integrated circuits. If one were to implement the slow path, this could be done by targeting the computing capacity hosting node itself (for example using its loopback address or its controller address) and then having the controller forward traffic to the computing capacity using the slow path. The drawback of this solution is of course that traffic is taken off the fast path and, in the case of numerous computing service sessions to be controlled at the same time, would most likely result in overloading the controller, the function of which is not optimized to forward data traffic.

Another solution could consist in relying on management software implemented at management plane level. Such software relies on knowledge of the equipment which is deployed and thus would be in a position to take into account computing capacity information entered by the network operator. Responsiveness of such a manual solution will always be less than an automatic configuration implementation.

Therefore, it would be useful to have a method which could facilitate solution of the problem of identifying, requesting and allocating computing capacities among nodes in a network, as well as reserving, modifying, and freeing up computing resources at a targeted point to allow for execution of applications.

### Summary of the Invention

It is an object of the invention to provide a method which could facilitate solution of the problem of identifying, requesting and allocating computing capacities among nodes in a network as well as the potential for reserving, modifying, and freeing up computing resources at a targeted point to allow for execution of applications.

According to a first aspect of the invention there is disclosed a method of reserving computing resources in a packet based communications network having a plurality of network elements, wherein at least a first network element has computing resources which may be assigned for use by a user application session originating at a second network element, the method having the steps of: transmitting a request from a second network element for computing resources to be reserved at the first network element; and receiving a confirmation at the second network element that the computing resources had been reserved.

In some of these embodiments the computing resources are characterised by a CPU equivalent capacity

In other of these embodiments the computing resources are characterised by an attribute selected from the group consisting of CPU clock speed, CPU type, associated RAM size, associated RAM type, and a specified number of CPU cores.

According to yet another embodiment of this aspect of the invention the packet based communications network supports the RSVP-TE protocol; the reserving is within a single session of the RSVP-TE protocol; and the request is inserted as an RSVP object into a RSVP PATH message.

In some embodiments of this embodiment of the invention the request RSVP object has the format

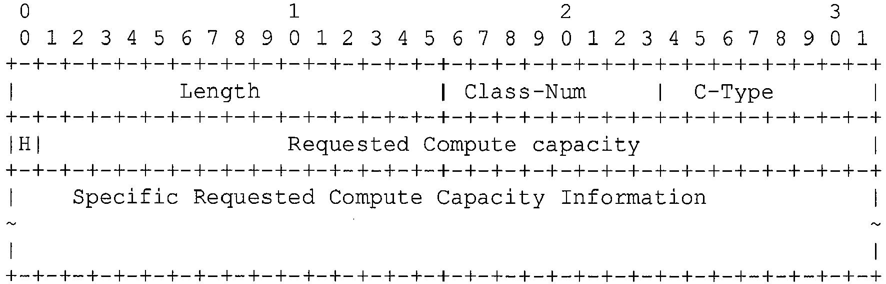

wherein: Length is a 16 bit quantity containing a value which indicates the length of the object in octets; Class-Num is an octet value 300 to indicate that a network element is to ignore and forward the object if it does not recognize the class; C-Type is set to 1; H is a flag indicating whether the impossibility to reserve the requested compute capacity shall generate an error; Requested Compute Capacity is a non-zero 32-bit ID that indicates a particular compute capacity; and Specific Requested Compute Capacity Information identifies computing information characterizing certain attributes of the reserved computing capacity.

In other embodiments of this aspect of the invention the packet based communications network supports the MPLS protocol; and the request is inserted as a forwarding equivalence class (FEC) element into an LDP message.

In some embodiments of this embodiment of the invention the forwarding equivalence class (FEC) element has the format

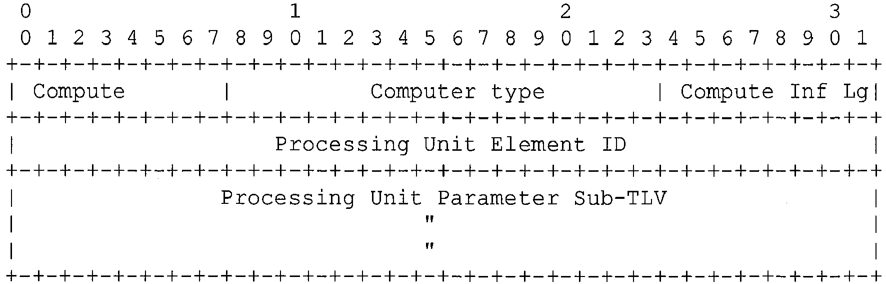

wherein: Compute is the name of the FEC; Computer Type is a 16-bit quantity containing a value that represents the type of processor hosted at the first network element; Compute Info Lg is the length required to encode the parameters of the FEC Element for "Compute" purposes; Processing Unit Element ID is a non-zero 32-bit ID that together with the Computer Type identifies a particular processing capability; and Processing Unit Parameter Sub-TLV is a value used to provide processing unit-specific parameters.

In yet further embodiments of this embodiment the Processing Unit Parameter Sub-TLV can further indicate that the first network element provides a temporary processing capacity above a specified level.

According to a second aspect of the invention there is disclosed a method for reserving computing resources in a first network element of a packet based communications network having a plurality of network elements, the method having the steps of: receiving a request from a second network element for computing resources to be reserved at the first network element; and transmitting a confirmation to the second network element that the computing resources had been reserved.

In some of these embodiments the computing resources are characterised by a CPU equivalent capacity

In other of these embodiments the computing resources are characterised by an attribute selected from the group consisting of CPU clock speed, CPU type, associated RAM size, associated RAM type, and a specified number of CPU cores.

According to yet another embodiment of this aspect of the invention the packet based communications network supports the RSVP-TE protocol; and the confirmation is inserted as an object RESV reservation acceptation message of RSVP message.

In some embodiments of this embodiment of the invention the confirmation object has the format

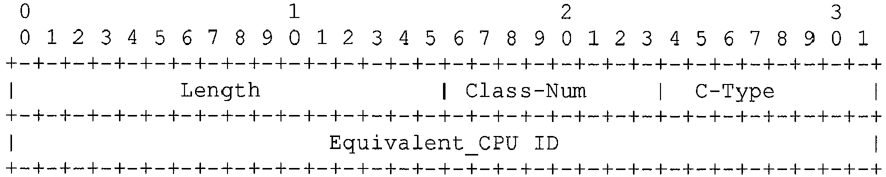

wherein: Length is a 16 bit quantity containing a value which indicates the length of the object in octets; Class-Num is an octet value 300 to indicate that a network element is to ignore and forward the object if it does not recognize the class; C-Type is set to 1; and Equivalent-CPU ID identifies the compute capacity successfully reserved.

According to yet another aspect of the invention there is provided a non-transitory machine-readable storage medium having machine-readable instructions for causing a processor to perform the method according to any one of the embodiments described heretofore.

Note: in the following the description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

### Brief Description of the drawings

The present invention will be further understood from the following detailed description of embodiments of the invention, with reference to the drawings in which like reference numbers are used to represent like elements, and:
**Fig. 1** illustrates an exemplary request object of RSVP Path message according to an embodiment of the invention;
**Fig. 2** illustrates an exemplary accept object of RSVP Resv message according to an embodiment of the invention;
**Fig. 3** illustrates an exemplary FEC TLV according to an embodiment of the invention; and
**Fig. 4** illustrates a block diagram of a network equipment processor assembly according to an embodiment of the invention.

### Detailed Description

In the following description, numerous specific details are set forth. However, it is understood that embodiments of the invention may be practiced without these specific details. In other instances, well-known circuits, structures and techniques have not been shown in detail in order not to obscure the understanding of this description. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such a feature, structure, or characteristic in connection with other embodiments whether or not explicitly described.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, cooperate or interact with each other. "Connected" is used to indicate the establishment of communication between two or more elements that are coupled with each other.

The techniques shown in the figures can be implemented using code and data stored and executed on one or more electronic devices (e.g., a network element). Such electronic devices store and communicate (internally and with other electronic devices over a network) code and data using machine-readable media, such as machine storage media (e.g., magnetic disks; optical disks; random access memory; read only memory; flash memory devices) and machine communication media (e.g., electrical, optical, acoustical or other form of propagated signals-such as carrier waves, infrared signals, digital signals, etc.). In addition, such electronic devices typically include a set of one or more processors coupled to one or more other components, such as a storage device, one or more user input/output devices (e.g., a keyboard and/or a display), and a network connection. The coupling of the set of processors and other components is typically through one or more busses and bridges (also termed as bus controllers). The storage device and signals carrying the network traffic respectively represent one or more machine storage media and machine communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

As used herein, a network element (e.g., a router, switch, bridge, etc.) is a piece of networking equipment, including hardware and software that communicatively interconnects other equipment on the network (e.g., other network elements, computer end stations, etc.). Customer computer end stations (e.g., workstations, laptops, palm tops, mobile phones, etc.) access content/services provided over the Internet and/or content/services provided on associated networks such as the Internet. The content and/or services are typically provided by one or more server computing end stations belonging to a service or content provider, and may include public webpages (free content, store fronts, search services, etc.), private webpages (e.g., username/password accessed webpages providing email services, etc.), corporate networks over VPNs, etc. Typically, customer computing end stations are coupled (e.g., through customer premise equipment coupled to an access network, wirelessly to an access network) to edge network elements, which are coupled through core network elements of the Internet to the server computing end stations.

In general in the description of the figures, like reference numbers are used to represent like elements.

In this disclosure, references to "we" in connection with steps, apparatus or the like, such as "we do" or "we use" can be interpreted as referring to the named inventors but can also can be interpreted as referring to hardware, software, etc., or combinations in various devices, platforms or systems that perform the steps and/or embody the apparatus, as should be apparent to one of ordinary skill in the art upon reading this disclosure.

According to an embodiment of an aspect of the invention there are defined new objects in RSVP-TE protocol. It is useful to describe the RSVP-TE protocol in general prior to description of the new RSVP objects.

To initiate an RSVP multicast session, a receiver first joins the multicast group specified by an IP destination address by using the Internet Group Membership Protocol (IGMP). In the case of a unicast session, unicast routing serves the function that IGMP, coupled with protocol-independent multicast (PIM), serves in the multicast case. After the receiver joins a group, a potential sender starts sending RSVP Path messages to the IP destination address. The receiver application receives a Path message and starts sending appropriate RSVP Reservation-Accept messages specifying the desired flow descriptors using RSVP. After the sender application receives a RSVP Reservation-Accept message, the sender can start sending data packets.

An RSVP-TE message is placed in the information field of a transport datagram. The RSVP-TE protocol allows applications to reserve bandwidth or any type of network resource interfaces to transport their data flows. It is used by a client to request a specific amount of resource at a node interface of the network on behalf of an application data flow.

RSVP is also used by routers to forward network resource reservation requests. To perform network resource reservation with RSVP-TE protocol, an RSVP-TE engine must in general (excluding tunneling RSVP applications) be implemented in the controller of each node involved, i.e. in receivers, senders, and intermediate nodes.

The RSVP-TE protocol carries the network resource request through the transport network visiting each node controller of the network used to carry the application data flow. Currently, RSVP and RSVP-TE are used indifferently for RSVP-TE (Resource reSerVation Protocol with Traffic Engineering extensions) protocol. At each node RSVP will attempt to make a network resource reservation for the flow. More particularly, in order to make a network resource reservation at a node, two local decision modules; admission control and policy control, are used.

Admission control will determine whether the node has sufficient available resources (i.e. bandwidth, interfaces, etc.) to supply the requested Quality-of-Service (QoS). This admission test is performed whenever a router receives a reservation message. If the admission test fails, the router rejects the reservation and returns a reservation request failed message.

Policy control will determine whether the user initiating the request has administrative permission to make the reservation.

If either of the above checks fails, the RSVP protocol will send an error notification to the application process that originated the request in the form of an RSVP reservation error (ResvErr) message.

If the node is able to satisfy the network resource request and if the policy control approves, the node effectively reserves the appropriate amount of network resource for the connection via parameters for example for a data flow, the parameters are in a packet classifier and a packet scheduler which are adjusted to obtain the desired QoS. The node then propagates the reservation message onward.

Two fundamental RSVP message types are
1. Path request messages, PATH, which originate at the sender and flow downstream towards receivers establishing (?...)
2. RESV accept messages which flow from the receiver of the flow and follow the reverse of a path that the data packets will use and create and maintain a "reservation state" in each node along the RSVP session. RESV messages are finally delivered to the sender of the application data flow itself so that it can set up appropriate network resource control parameters for the first hop.

Each reservation session for network resource stored in a router has an associated timer. If a reservation session's timer expires, then the network resource reservation session becomes "staled" and according to the policy control function, the reservation session may be removed. If a receiver desires to maintain a reservation session, it must periodically refresh the reservation session by sending the corresponding reservation messages. A receiver can also change its reservation (e.g., the amount of network resource or the senders it wants to receive from) by adjusting its reservation in its stream of refresh messages. Refreshment messages comprising PATH request messages and RESV reservation-accept messages are transmitted periodically from end to end.

According to an embodiment of the invention a new object termed COMPUTE_REQUEST is to be inserted in the Path message of RSVP.

The message shall contain the computing capacity which is requested to be reserved at the end-point of the unicast RSVP session. The requested computing capacity can be expressed, for example, using different parameters such CPU clock speed, type of CPU (e.g. AMD processors, Intel, others) size of the RAM, type of RAM, or other specific computer parameter options such as number of cores.

In one contemplated embodiment, the computing capacity can be quantified with a "CPU equivalent" denoted as e-CPU where 1 e-CPU (equivalent Central Processor Unit) is equivalent to the processing capacity of a known basic single threaded processor. For example if the type of CPU is set to Intel, 1 e-CPU may be the equivalent of one single hyperthread on one 2.6GHz Intel Xeon E5 (Sandy Bridge), or one 2.5GHz Intel Xeon E5 v2 (Ivy Bridge), or one 2.3 GHz Intel Xeon E5 v3 (Haswell).

When a Virtual Machine (VM) defined by its end-user is allocated over an identified e-CPU, either the entire capacity of physical core is allocated to the VM or alternatively, part of the capacity when there are several VMs sharing the same computing capacity. According to a contemplated embodiment, the option to share a compute capacity between several VMs can be configured within the COMPUTE_REQUEST object.

Additionally the COMPUTE_REQUEST object shall include a 1 bit flag (H bit) indicating whether the impossibility to reserve the requested compute capacity shall generate an error. This error will generate a message which results in the removal of the reservation of the transport network resource requested in the Path message for the related connection between the source node and destination node of the RSVP signaling session.

According to an alternative embodiment, the COMPUTE_REQUEST object is defined to also include specific computing information characterizing certain attributes of the reserved computing capacity. By way of example, such attributes could include the performance attributes of the CPU including, for example, clock speed, number of CPU cores, and the size of the associated memory caches, as well as the desired equivalent CPU type in those instances wherein multiple types may be available.

When a COMPUTE_REQUEST object is used to request a computing capacity, the requested compute capacity fields of the object together with SESSION object jointly provide information of the computing capacity requested at the destination node.

For the destination node to satisfy this request, it is apparent that the node must be a computer capable network node. For backward compatibility with existing implementations of RSVP that do not support the capability to reserve and allocate computing capacity, COMPUTE_REQUEST object uses a class number of the form 11bbbbbb. According to a contemplated embodiment, when a non-computer capable node receives a message carrying a COMPUTE_REQUEST object, the node controller should silently ignore the object and forward it unexamined and unmodified in all RSVP messages resulting from this message carrying the COMPUTE_REQUEST object.

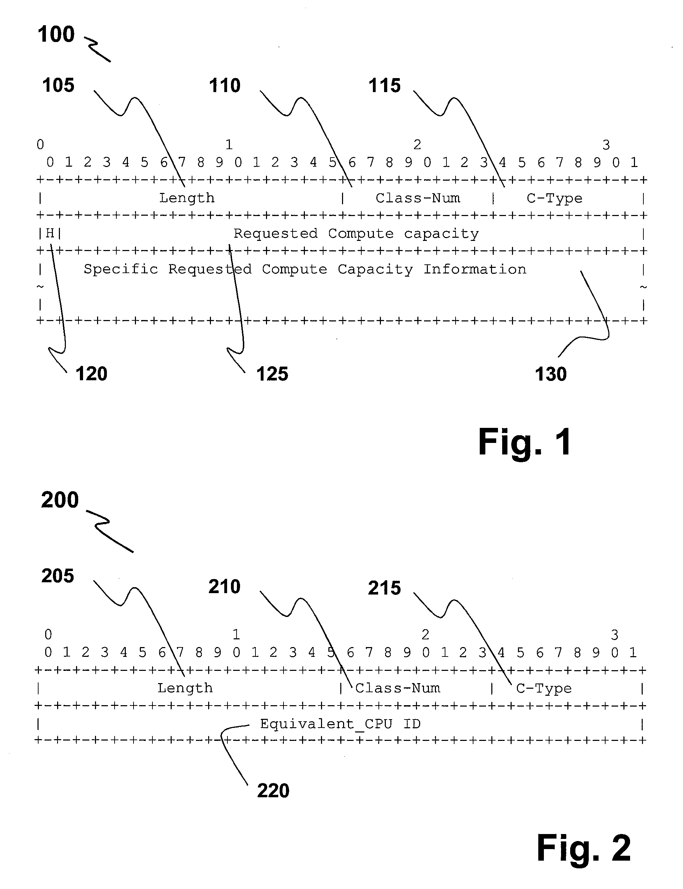

Referring now to **Fig. 1** there may be seen the format of an exemplary COMPUTE_REQUEST object which complies with normal field definitions for RSVP objects.

The COMPUTE_REQUEST object **100** has Length field **105,** the 16 bits of which is to indicate the length of the object in octets. Class-Num field **110** has form "11bbbbbb" with a suggested octet value 300 to indicate that a node is to ignore and forward the object if it does not recognize the class. C-Type field **115** is set to 1 to indicate the particular object type. The H bit flag **120** is a 1 bit flag (H bit) indicating whether the impossibility to reserve the requested compute capacity shall generate an error as described *supra.* The Requested Compute Capacity field **125** defines specific computing capacity. The Specific Requested Compute Capacity Information field **130** includes specific computing information characterizing certain attributes of the reserved computing capacity. Standardized values for these fields can be established by convention, and will typically be established, for example, by IANA (Internet Assigned Numbers Authority).

According to an embodiment of the invention a new object termed COMPUTE_CAPACITY is to be inserted in the RESV reservation acceptation message of RSVP.

The compute capacity delivered can be identified in the COMPUTE_CAPACITY Object. The COMPUTE_CAPACITY object (Class-Num of form 11bbbbbb with value =301, C-Type = 1, can be suggested values, TBA by IANA) has the format:

Referring now to **Fig. 2** there may be seen the format of an exemplary COMPUTE_CAPACITY object which complies with normal field definitions for RSVP objects.

The COMPUTE_CAPACITY object **200** has Length field **205,** the 16 bits of which is to indicate the length of the object in octets. Class-Num field **210** has form "11bbbbbb" with a suggested octet value 301 to indicate that a node is to ignore and forward the object if it does not recognize the class. The C-Type field **215** is set to 1 to indicate the particular object type. The Equivalent CPU ID field **220** contains a unique identifier (at least within the scope of the RSVP session) identifying the compute capacity successfully reserved. This identifier may be a pointer allowing to access the reserved e-CPUs. The reception of this Resv message at the source node of the RSVP session shall be interpreted as a successful reservation of the requested compute capacity carried in the corresponding Path message. Standardized values for these fields can be established by convention, and will typically be established, for example, by IANA (Internet Assigned Numbers Authority).

According to an embodiment of the invention, new error codes are defined to be carried in a PathErr message of RSVP in case the request for the compute capacity reservation fails, for example because of a lack of available e-CPUs to fulfill the request for compute capacity. As well, new error codes are defined to be carried in a ResvErr message of RSVP when errors occur in processing Resv messages carrying compute capacity information (e.g. e-CPU identifier). Additionally, new error codes are defined that may report an unplanned disruption of using an identified compute capacity. Standardized values for these error codes can be established by convention, and will typically be established, for example, by IANA (Internet Assigned Numbers Authority).

In another contemplated embodiment, PathTear and ResvTear messages of RSVP are used to free reserved or allocated compute capacity by carrying the new optional object COMPUTE_CAPACITY identifying the e-CPU to be released at the end point of the RSVP session.

In another contemplated embodiment the node hosting the reserved compute capacity may optionally request a confirmation that the RSVP session was successfully established by adding a RESV_CONFIRM object (carrying its IP address) in the Resv message it triggers upstream.

According to an embodiment of an aspect of the invention there is defined a new FEC TLV in MPLS protocol. It is useful to describe the MPLS protocol in general prior to description of the new FEC TLV.

Multi-protocol Label Switching (MPLS) is a mechanism used to engineer traffic patterns within IP networks. Using MPLS, a source device can request a path through a network, i.e. a Label Switched Path (LSP). An LSP defines a distinct path through the network to carry MPLS packets from the source device to a destination device. MPLS label switching routers (LSRs) must agree on the meaning of the labels used to forward traffic between and through them. The LDP (Label Distribution Protocol) [LDP Specification; L. Andersson et al.; IETF RFC 5036, October 2007] defines a corresponding set of procedures and messages by which one LSR informs another of the label bindings it has made. A short label associated with a particular LSP is affixed to packets that travel through the network via the LSP. Routers along the path cooperatively perform operations to forward the MPLS packets along the established path.

The LDP protocol associates what is known as a Forwarding Equivalence Class (FEC) with each LSP it creates. A FEC element is placed in the information field of an IP datagram. The FEC associated with an LSP specifies which packets are mapped to that LSP.

According to an embodiment of the invention, a new FEC element with processing-capability parameters is defined which enables an LDP engine to identify processing capacities and to signal the attributes of these processing capacities to other routers having LDP controller engines. The FEC allows the set-up and the maintenance of LDP sessions to identify, reserve, allocate one or several processing capacity sessions hosted at one computer capable router.

According to an embodiment of the invention, a processing capacity as labeled by a computer capable router may be quantified with a unit of measure called an equivalent Central Processor Unit (eCPU). In one embodiment, 1 eCPU (equivalent Central Processor Unit) is equivalent to the processing capacity of 1.7 GHz 2006 XEON processor (Intel). In other embodiments alternative eCPU units may be defined.

A capacity of processing measured as a number of eCPUs can be represented as one or more Processing Unit Elements (PUEs). Each Processing Unit Element encodes the specific processing capability items that a computer capable router may offer.

LDP uses a Type-Length-Value (TLV) encoding scheme to encode the information carried in LDP messages. These are exchanged by sending LDP protocol data units (PDUs) over LDP-session Transmission Control Protocol (TCP) connections. The FEC TLV is used to identify the particular processing capacity that a label is bound to. A particular Processing Unit Element is carried in a newly defined FEC TLV as described below.

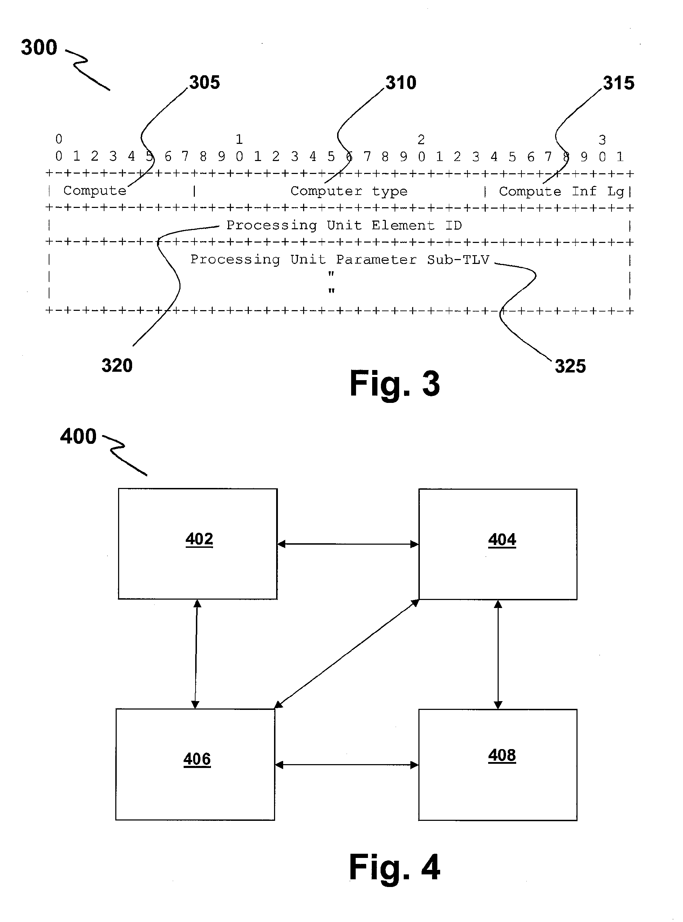

The new type of FEC element **300** is defined for encoding processing capability items as follows in reference to **FIG. 3****.**

As may be seen in **FIG. 3****,** the type name **305** of the new FEC element for computing in this embodiment is "Compute" and its one octet encoding will be defined as part of a standard definition for interoperability.

The "Computer Type" **310** is a 16-bit quantity containing a value that represents the type of processor hosted at the router. The possible values for that field will have to be defined as part of a standard definition for interoperability.

The "Compute Info Lg" **315** is the length required to encode the parameters of the FEC Element for "Compute" purposes.

The "Processing Unit Element ID" **320** is a non-zero 32-bit ID that, together with the "Computer Type" **310** identifies a particular processing capability as defined as part of a standard definition for interoperability.

The "Processing Unit Parameter Sub-TLV" **325** is used to provide processing unit-specific parameters. This would typically include, by way of example, the processing capacity quantified with eCPU and may include other parameters such as cache memory specific information, manufacturer (e.g. Intel, AMID, etc.), policies, etc.

In some embodiments the "Processing Unit Parameter Sub-TLV" **325** named "Policy" can include the further option that the Processing Unit provides a processing capacity above the level defined in the parameter sub-TLV "processing capacity". This option is to accommodate the contexts where occasionally the processing capacity needs are above the level defined in the FEC. These are contexts typified by processing capacity requirements from the application user that are usually modest or not used for long period of times, but then punctuated by an intense burst of processing activity.

As the "processing unit parameter sub-TLV" is part of the FEC; and as the present rules of LDP make it impossible to change the processing unit parameters once the LDP session has been set up the processing unit parameter Sub-TLV fields can not be used to pass information, such as status information of the servers hosting the processing capacity, which may continually change during the life of the compute LDP session. Thus the burst policy is useful for those application users having long periods of low processing utilization alternating with being punctuated by bursts of full-throttle processing that can consume much more than the "processing capacity" defined in the Processing Unit Parameter Sub-TLV **325.**

Referring now to **Fig. 4****,** a assembly **400** which in certain embodiments may be used in the determination of computing capacity, includes a network equipment processor element **406** (e.g., a central processing unit (CPU) and/or other suitable processor(s)), a memory **408** (e.g., random access memory (RAM), read only memory (ROM), and the like), a cooperating module/process **402,** and various input/output devices **404** (e.g., a user input device (such as a keyboard, a keypad, a mouse, and the like), a user output device (such as a display, a speaker, and the like), an input port, an output port, a receiver, a transmitter, and storage devices (e.g., a tape drive, a floppy drive, a hard disk drive, a compact disk drive, and the like)).

It will be appreciated that the functions depicted and described herein may be implemented in hardware, for example using one or more application specific integrated circuits (ASIC), and/or any other hardware equivalents. Alternatively, according to one embodiment, the cooperating process **402** can be loaded into memory **408** and executed by network equipment processor **406** to implement the functions as discussed herein. As well, cooperating process **402** (including associated data structures) can be stored on a tangible, non-transitory computer readable storage medium, for example magnetic or optical drive or diskette, semiconductor memory and the like.

Therefore what has been disclosed is a method which facilitates solution of the problem of identifying, requesting and allocating computing capacities among nodes in a network, as well as reserving, modifying, and freeing up computing resources at a targeted point to allow for execution of applications.

Note, in the preceding discussion a person of skill in the art would readily recognize that steps of various above-described methods can be performed by appropriately configured network processors. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices are all tangible and non-transitory storage media and may be, e.g., digital memories, magnetic storage media such as a magnetic disks and magnetic tapes, hard drives, or optically readable digital data storage media. The embodiments are also intended to cover network element processors programmed to perform said steps of the above-described methods.

Numerous modifications, variations and adaptations may be made to the embodiment of the invention described above without departing from the scope of the invention, which is defined in the claims.

## Claims

1. A method for reserving computing resources in a packet based communications network having a plurality of network elements, wherein at least a first network element has computing resources which may be assigned for use by a user application session originating at a second network element, the method comprising the steps of:
transmitting a request from a second network element for computing resources to be reserved at said first network element; and
receiving a confirmation at said second network element that said computing resources had been reserved.

2. A method as claimed in claim 1 wherein
said computing resources are **characterised by** a CPU equivalent capacity.

3. A method as claimed in claim 1 wherein
said computing resources are **characterised by** an attribute selected from the group consisting of CPU clock speed, CPU type, associated RAM size, associated RAM type, and a specified number of CPU cores.

4. A method as claimed according to any of the claims 1 to 3 wherein
said packet based communications network supports the RSVP-TE protocol;
said reserving is within a single session of said RSVP-TE protocol; and
said request is inserted as an RSVP object into a RSVP PATH message.

5. A method as claimed in claim 4 wherein said request RSVP object has the format 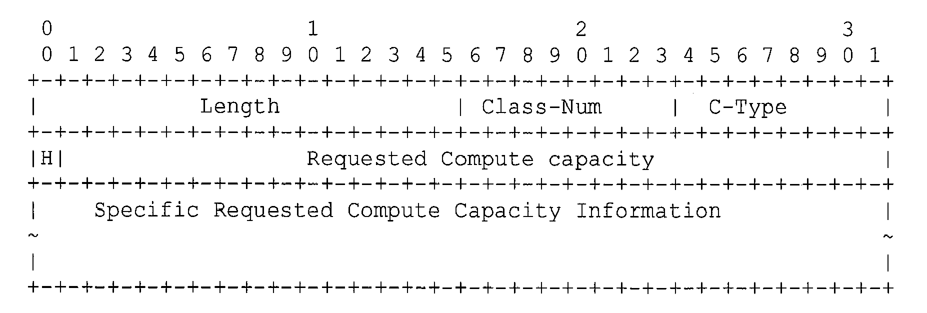 wherein:
- Length is a 16 bit quantity containing a value which indicates the length of the object in octets;
- Class-Num is an octet value 300 to indicate that a network element is to ignore and forward the object if it does not recognize the class;
- C-Type is set to 1;
- H is a flag indicating whether the impossibility to reserve the requested compute capacity shall generate an error;
- Requested Compute Capacity is a non-zero 32-bit ID that indicates a particular compute capacity; and
- Specific Requested Compute Capacity Information identifies computing information characterizing certain attributes of the reserved computing capacity.

6. A method as claimed according to any of the claims 1 to 3 wherein
said packet based communications network supports the MPLS protocol; and
said request is inserted as a forwarding equivalence class (FEC) element into an LDP message.

7. A method as claimed in claim 6 wherein said forwarding equivalence class (FEC) element has the format 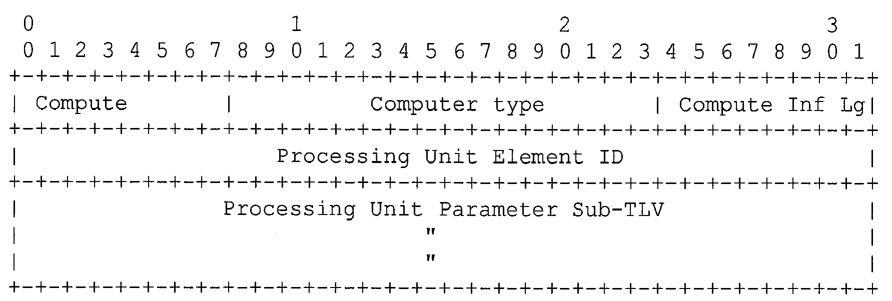 wherein:
- Compute is the name of the FEC;
- Computer Type is a 16-bit quantity containing a value that represents the type of processor hosted at said first network element;
- Compute Info Lg is the length required to encode the parameters of the FEC Element for "Compute" purposes;
- Processing Unit Element ID is a non-zero 32-bit ID that together with the Computer Type identifies a particular processing capability; and
- Processing Unit Parameter Sub-TLV is a value used to provide processing unit-specific parameters.

8. A method as claimed in claim 7 wherein
said Processing Unit Parameter Sub-TLV can further indicate that the first network element provides a temporary processing capacity above a specified level.

9. A method for reserving computing resources in a first network element of a packet based communications network having a plurality of network elements, the method comprising the steps of:
receiving a request from a second network element for computing resources to be reserved at said first network element; and
transmitting a confirmation to said second network element that said computing resources had been reserved.

10. A method as claimed in claim 9 wherein
said computing resources are **characterised by** a CPU equivalent capacity.

11. A method as claimed in claim 9 wherein
said computing resources are **characterised by** an attribute selected from the group consisting of CPU clock speed, CPU type, associated RAM size, associated RAM type, and number of CPU cores.

12. A method as claimed according to any of the claims 9 to 11 wherein
said packet based communications network supports the RSVP-TE protocol; and said confirmation is inserted as an object RESV reservation acceptation message of RSVP message.

13. A method as claimed in claim 12 wherein said confirmation object has the format 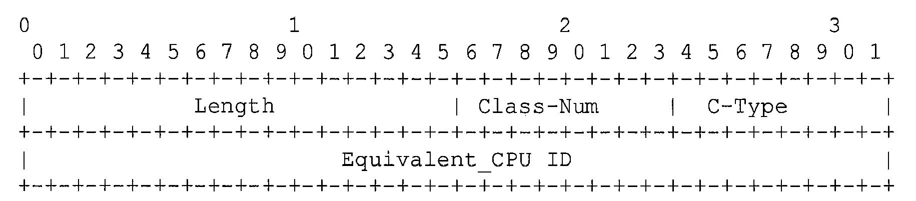 wherein:
- Length is a 16 bit quantity containing a value which indicates the length of the object in octets;
- Class-Num is an octet value 300 to indicate that a network element is to ignore and forward the object if it does not recognize the class;
- C-Type is set to 1; and
- Equivalent-CPU ID identifies the compute capacity successfully reserved.

14. A non-transitory machine-readable storage medium having machine-readable instructions for causing a processor to perform the method according to any one of the claims 1 to 13.

## Amended claims

### Amended claims in accordance with Rule 137(2) EPC.

1. A method for reserving computing resources in a packet based communications network having a plurality of network elements, wherein at least a first network element has computing resources which may be assigned for use by a user application session originating at a second network element, the method comprising the steps of:
transmitting a request from a second network element for computing resources to be reserved at said first network element, the request for computing resources to be reserved containing the computing capacity available for user application session which is requested to be reserved; and
receiving a confirmation at said second network element that said computing resources had been reserved.

2. A method as claimed in claim 1 wherein
said computing resources are **characterised by** a CPU equivalent capacity.

3. A method as claimed in claim 1 wherein
said computing resources are **characterised by** an attribute selected from the group consisting of CPU clock speed, CPU type, associated RAM size, associated RAM type, and a specified number of CPU cores.

4. A method as claimed according to any of the claims 1 to 3 wherein
said packet based communications network supports the RSVP-TE protocol; said reserving is within a single session of said RSVP-TE protocol; and said request is inserted as an RSVP object into a RSVP PATH message.

5. A method as claimed in claim 4 wherein said request RSVP object has the format 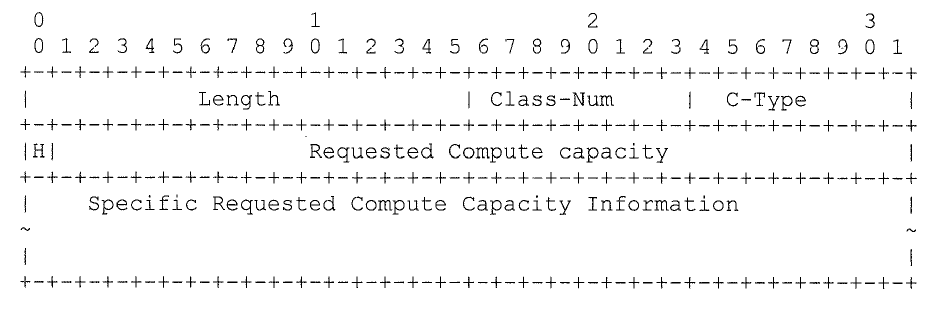 wherein:
- Length is a 16 bit quantity containing a value which indicates the length of the object in octets;
- Class-Num is an octet value 300 to indicate that a network element is to ignore and forward the object if it does not recognize the class;
- C-Type is set to 1;
- H is a flag indicating whether the impossibility to reserve the requested compute capacity shall generate an error;
- Requested Compute Capacity is a non-zero 32-bit ID that indicates a particular compute capacity; and
- Specific Requested Compute Capacity Information identifies computing information characterizing certain attributes of the reserved computing capacity.

6. A method as claimed according to any of the claims 1 to 3 wherein
said packet based communications network supports the MPLS protocol; and
said request is inserted as a forwarding equivalence class (FEC) element into an LDP message.

7. A method as claimed in claim 6 wherein said forwarding equivalence class (FEC) element has the format 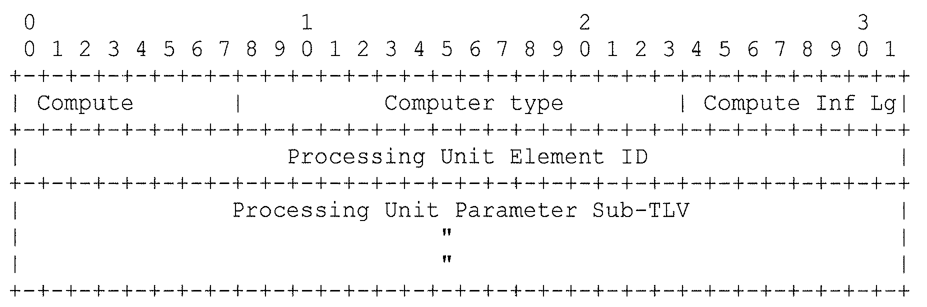 wherein:
- Compute is the name of the FEC;
- Computer Type is a 16-bit quantity containing a value that represents the type of processor hosted at said first network element;
- Compute Info Lg is the length required to encode the parameters of the FEC Element for "Compute" purposes;
- Processing Unit Element ID is a non-zero 32-bit ID that together with the Computer Type identifies a particular processing capability; and
- Processing Unit Parameter Sub-TLV is a value used to provide processing unit-specific parameters.

8. A method as claimed in claim 7 wherein
said Processing Unit Parameter Sub-TLV can further indicate that the first network element provides a temporary processing capacity above a specified level.

9. A method for reserving computing resources in a first network element of a packet based communications network having a plurality of network elements, the method comprising the steps of:
receiving a request from a second network element for computing resources to be reserved at said first network element; and
transmitting a confirmation to said second network element that said computing resources had been reserved.

10. A method as claimed in claim 9 wherein
said computing resources are **characterised by** a CPU equivalent capacity.

11. A method as claimed in claim 9 wherein
said computing resources are **characterised by** an attribute selected from the group consisting of CPU clock speed, CPU type, associated RAM size, associated RAM type, and number of CPU cores.

12. A method as claimed according to any of the claims 9 to 11 wherein
said packet based communications network supports the RSVP-TE protocol; and said confirmation is inserted as an object RESV reservation acceptation message of RSVP message.

13. A method as claimed in claim 12 wherein said confirmation object has the format 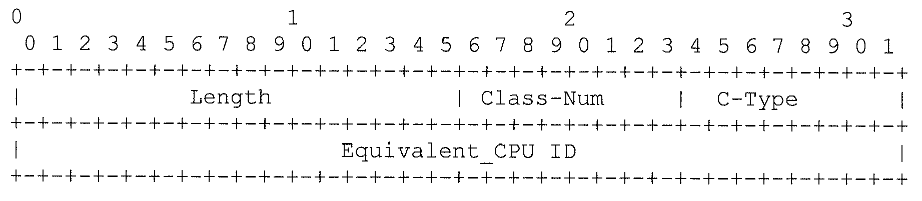 wherein:
- Length is a 16 bit quantity containing a value which indicates the length of the object in octets;
- Class-Num is an octet value 300 to indicate that a network element is to ignore and forward the object if it does not recognize the class;
- C-Type is set to 1; and
- Equivalent_CPU ID identifies the compute capacity successfully reserved.

14. A non-transitory machine-readable storage medium having machine-readable instructions for causing a processor to perform the method according to any one of the claims 1 to 13.
